(19) Europäisches Patentamt
European Patent Office
Office européen des brevets

(11) **EP 4 383 631 A1**

(12) **EUROPEAN PATENT APPLICATION**
published in accordance with Art. 153(4) EPC

(43) Date of publication:
**12.06.2024 Bulletin 2024/24**

(21) Application number: **22853486.3**

(22) Date of filing: **04.08.2022**

(51) International Patent Classification (IPC):
*H04L 5/00* (2006.01)    *H04L 1/08* (2006.01)
*H04L 25/02* (2006.01)    *H04W 52/14* (2009.01)
*H04W 72/04* (2023.01)    *H04W 72/12* (2023.01)

(52) Cooperative Patent Classification (CPC):
**H04L 1/08; H04L 5/00; H04L 25/02; H04W 52/14;
H04W 72/04; H04W 72/12**

(86) International application number:
**PCT/KR2022/011557**

(87) International publication number:
**WO 2023/014110 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.08.2021 KR 20210103696**

(71) Applicant: **LG Electronics Inc.**
**Yeongdeungpo-gu**
**Seoul 07336 (KR)**

(72) Inventors:
• **SHIM, Jaenam**
**Seoul 06772 (KR)**
• **KO, Hyunsoo**
**Seoul 06772 (KR)**
• **YOU, Hyangsun**
**Seoul 06772 (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(54) **METHOD AND APPARATUS FOR TRANSMITTING UPLINK CHANNEL IN WIRELESS COMMUNICATION SYSTEM**

(57)     A method and an apparatus for transmitting or receiving an uplink channel in a wireless communication system are disclosed. A method by which a UE transmits an uplink channel in a wireless communication system, according to one embodiment of the present disclosure, comprises the steps of: receiving, from a network, information related to demodulation reference signal (DMRS) bundling for an uplink channel; receiving, from the network, downlink control information (DCI) including one or more fields indicating transmission or reception parameters; and transmitting, to the network, the uplink channel based on the number of repetitions while applying the DMRS bundling during a time domain window, wherein the size of the time domain window can be based on the value of the one or more fields.

FIG. 9

| Receive information related to DMRS bundling for uplink channel | ~ S910 |
| Receive DCI, or report on transmission or reception related parameter | ~ S920 |
| Perform uplink channel transmission based on number of repetitions by applying DMRS bundling during time domain window | ~ S930 |

EP 4 383 631 A1

Processed by Luminess, 75001 PARIS (FR)

**Description**

[Technical Field]

The present disclosure relates to a wireless communication system, and in more detail, relates to a method and a device for transmitting or receiving an uplink channel in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical problem of the present disclosure is to provide a method and a device for transmitting or receiving an uplink channel based on a time window related to transmission parameter application in a wireless communication system.

An additional technical problem of the present disclosure is to provide a method and a device for dynamically or adaptively configuring or indicating a time window related to transmission parameter application for an uplink channel in a wireless communication system.

The technical objects to be achieved by the present disclosure are not limited to the above-described technical objects, and other technical objects which are not described herein will be clearly understood by those skilled in the pertinent art from the following description.

[Technical Solution]

A method for transmitting an uplink channel by a terminal in a wireless communication system according to an aspect of the present disclosure includes receiving from a network information related to demodulation reference signal (DMRS) bundling for the uplink channel; receiving from the network downlink control information (DCI) including at least one field indicating a transmission or reception parameter; and transmitting the uplink channel based on the number of repetitions to the network while applying the DMRS bundling during a time domain window, and a size of the time domain window may be based on a value of the at least one field.

A method for receiving an uplink channel by a base station in a wireless communication system according to an additional aspect of the present disclosure includes transmitting to a terminal information related to demodulation reference signal (DMRS) bundling for the uplink channel; transmitting to the terminal downlink control information (DCI) including at least one field indicating a transmission or reception parameter; and receiving from the terminal the uplink channel based on the number of repetitions to which the DMRS bundling is applied during a time domain window, and a size of the time domain window may be based on a value of the at least one field.

[Technical Effects]

According to an embodiment of the present disclosure, a method and a device for transmitting or receiving an uplink channel based on a time window related to transmission parameter application in a wireless communication system may be provided.

According to an embodiment of the present disclosure, a method and a device for dynamically or adaptively configuring or indicating a time window related to transmission parameter application for an uplink channel in a wireless communication system may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a diagram for describing examples of PUSCH repetition transmission to which the present disclosure may be applied.
FIG. 8 is a diagram showing examples of a DMRS symbol position to which the present disclosure may be applied.
FIG. 9 is a diagram for describing an example of an uplink channel transmission method of a terminal according to the present disclosure.
FIG. 10 is a diagram for describing an example of an uplink channel reception method of a base station according to the present disclosure.
FIG. 11 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.
In some cases, known structures and devices may be omitted or may be shown in a form of a block diagram based on a core function of each structure and device in order to prevent a concept of the present disclosure from being ambiguous.
In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.
In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.
A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.
The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality
MAC: medium access control
NZP: non-zero power

OFDM: orthogonal frequency division multiplexing
PDCCH: physical downlink control channel
PDSCH: physical downlink shared channel
PMI: precoding matrix indicator
RE: resource element
RI: Rank indicator
RRC: radio resource control
RSSI: received signal strength indicator
Rx: Reception
QCL: quasi co-location
SINR: signal to interference and noise ratio
SSB (or SS/PBCH block): Synchronization signal block (including PSS (primary synchronization signal), SSS (secondary synchronization signal) and PBCH (physical broadcast channel))
TDM: time division multiplexing
TRP: transmission and reception point
TRS: tracking reference signal
Tx: transmission
UE: user equipment
ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

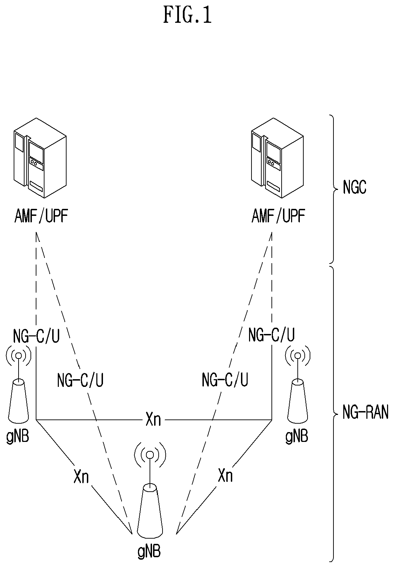

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

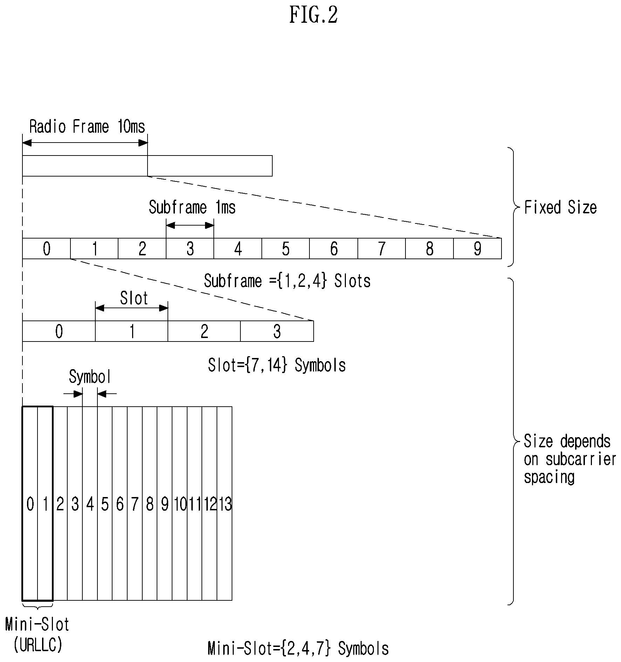

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, μ). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10ms$. Here, a radio frame is configured with 10 subframes having a duration of $T_{sf} = (\Delta f_{max} N_f/1000) \cdot T_c = 1ms$, respectively.

In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu}-1\}$ in a subframe and are numbered in an increasing order of $n_{s,f}^{\mu} \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={ 1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

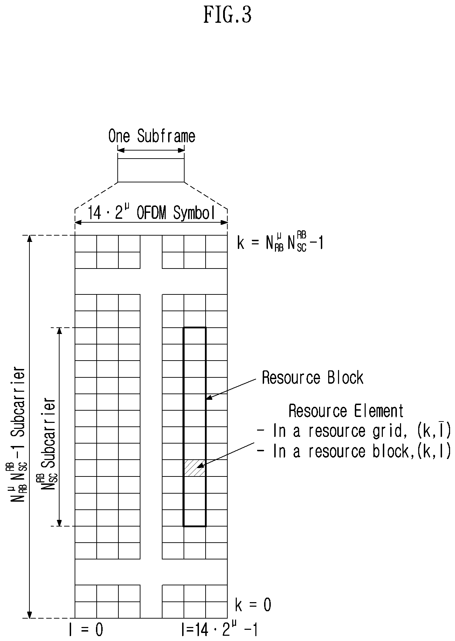

FIG. 3 illustrates a resource grid in a wireless communication system to which the present disclosure may be applied. In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies.

In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number). Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

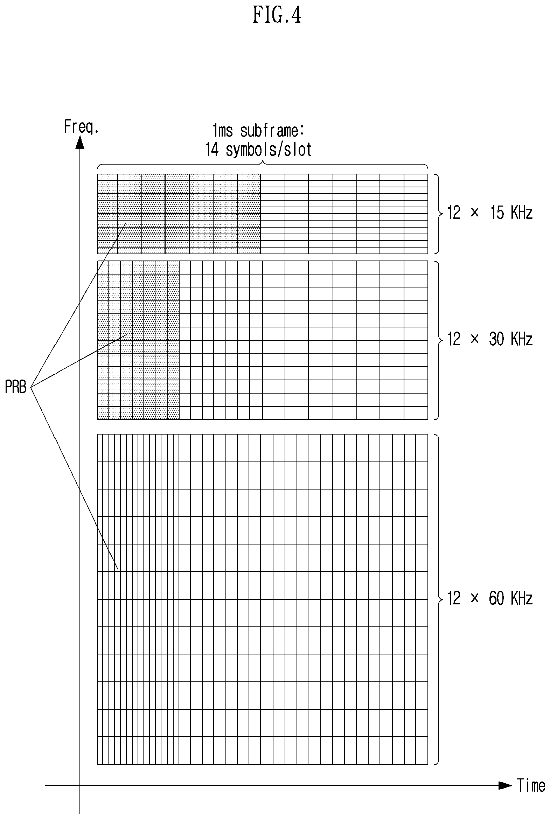

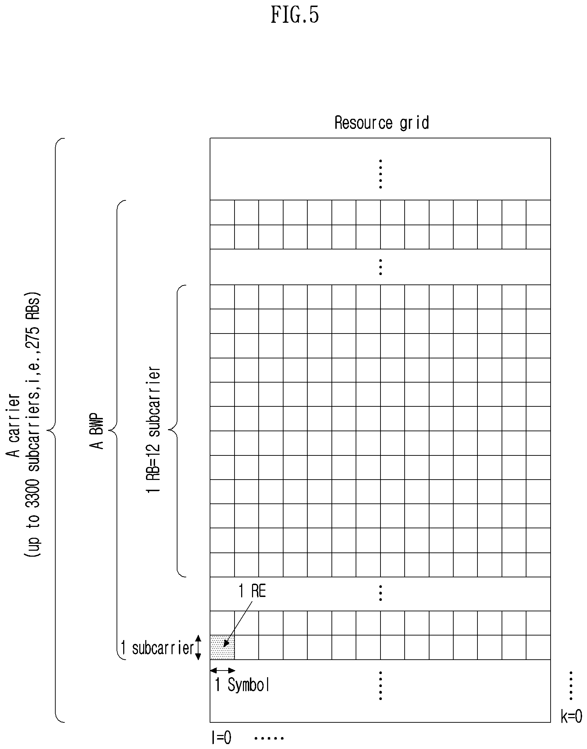

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC.

A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP.

But, a configuration on a DL/UL BWP may not be received when a terminal performs an initial access procedure or before a RRC connection is set up, so a DL/UL BWP which is assumed by a terminal under these situations is defined as an initial active DL/UL BWP.

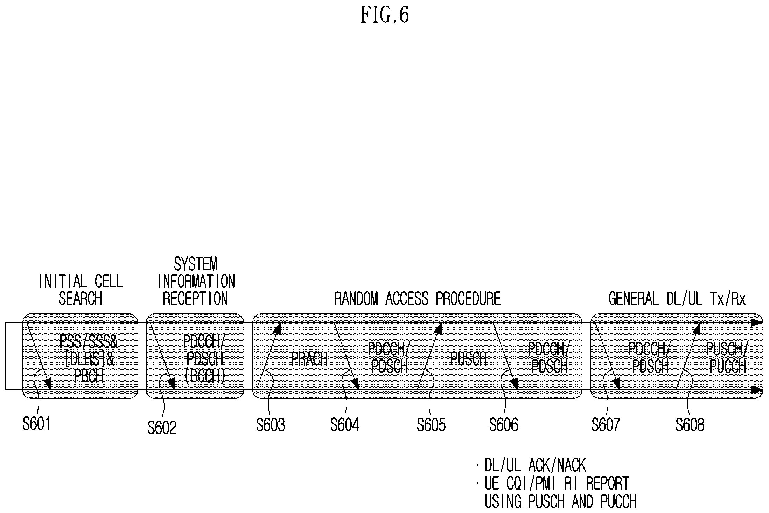

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation and Coding Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

PUCCH Configuration and Repetition Transmission Method

A PUCCH may deliver uplink control information (UCI). UCI may include at least one of hybrid automatic request (HARQ)-ACK information, scheduling request (SR) or CSI information. An UCI type (or a usage, a payload type), a transmission duration, etc. that may be transmitted per PUCCH format may vary. For example, as in Table 6 below, a PUCCH may be divided into five formats.

[Table 6]

| Format | OFDM Symbol-based PUCCH Duration | Number of Bits | Usage | Waveform | modulation |
|---|---|---|---|---|---|
| 0 | 1-2 | ≤ 2 | HARQ-ACK, SR | CP-OFDM | - |
| 1 | 4-14 | ≤ 2 | HARQ-ACK, SR | CP-OFDM | BPSK or QPSK |
| 2 | 1-2 | >2 | HARQ-ACK, SR, CSI | CP-OFDM | QPSK |
| 3 | 4-14 | >2 | HARQ-ACK, SR, CSI | DFT-s-OFDM | $\pi/2$ BPSK or QPSK |
| 4 | 4-14 | >2 | HARQ-ACK, SR, CSI | DFT-s-OFDM | $\pi/2$ BPSK or QPSK |

A PUCCH in format 0 and 2 may be expressed as a short duration PUCCH and a PUCCH in format 1, 3 and 4 may be expressed as a long duration PUCCH. A PUCCH in format 0, 1 and 4 may be multiplexed in a frequency/time domain, but a PUCCH in format 2 and 3 may not be multiplexed in a frequency/time domain. In order to enhance a PUCCH coverage, a method such as a sequence-based DMRS-less PUCCH configuration, higher DMRS density, a dynamic PUCCH repetition factor indication or DMRS bundling for a PUCCH, improved frequency hopping, improved power control, an increase in the number of allowed repetitions, etc. may be utilized.

In addition, PUCCH repetition transmission may be performed to enhance a PUCCH coverage. Here, only a PUCCH in format 1, 3 and 4 (i.e., a long duration PUCCH) may be transmitted repeatedly. The number of repetition transmissions of a PUCCH may be configured by higher layer signaling (e.g., 'nrofSlots' included in 'PUCCH-Format-Config') and may be configured as 2, 4 or 8.

A repeatedly transmitted PUCCH may have the same position within each slot. In other words, the number of first symbols and consecutive symbols of a PUCCH repeatedly transmitted in each slot may be the same. In addition, when frequency hopping is configured by higher layer signaling (e.g., 'interslotFrequencyHopping' included in 'PUCCH-FormatConfig') for a repeatedly transmitted PUCCH, a position of a PUCCH during an even slot may be defined by a 'startPRB' information element and a position of a PUCCH during an odd slot may be defined by a 'secondHopPRB' information element.

The higher layer signaling ('PUCCH-FormatConfig') which includes information related to the number of repetition transmissions of a PUCCH and frequency hopping may be configured as in Table 7 below.

【Table 7】

```
PUCCH-FormatConfig ::=                    SEQUENCE {
    interslotFrequencyHopping             ENUMERATED {enabled}
OPTIONAL, -- Need R
    additionalDMRS                        ENUMERATED {true}
OPTIONAL, -- Need R
    maxCodeRate                           PUCCH-MaxCodeRate
OPTIONAL, -- Need R
    nrofSlots                             ENUMERATED {n2,n4,n8}
OPTIONAL, -- Need S
    pi2BPSK                               ENUMERATED {enabled}
```

```
OPTIONAL, -- Need R
    simultaneousHARQ-ACK-CSI              ENUMERATED {true}
OPTIONAL    -- Need R
}
```

And, a terminal may not be multiplexed for a different UCI type of a repeated PUCCH. Accordingly, when a different PUCCH is overlapped in a duration within a slot, a terminal may transmit only one PUCCH according to a priority rule, and drop the remaining PUCCHs or transmit the earliest starting PUCCH with the same priority. As an example of a priority rule, a priority may be higher in order of HARQ-ACK, SR and CSI. In other words, only a PUCCH with a long duration format may be repeatedly transmitted only within the same position of each slot and the number of actual repetitions may be smaller than the number of times configured by higher layer signaling. In addition, it may be difficult to perform PUCCH repetition transmission in a specific slot (e.g., a special slot, etc.) that includes all of a downlink, an uplink and a flexible symbol. In this case, the above-described method may be utilized for PUCCH coverage enhancement.

In addition, PUCCH repetition transmission may be performed in the specific slot through UCI split (e.g., splitting an UCI payload into a short duration PUCCH and a long duration PUCCH). But, the above-described method has a limit that a latency decrease has a higher profit compared to coverage enhancement.

For coverage enhancement, as an example of a PUCCH repetition transmission method, like the existing PUSCH repetition type B, a PUCCH may be transmitted repeatedly in a consecutive symbol instead of configuring a repetition by designating a start symbol and a length within a slot.

PUSCH Repetition

A terminal may transmit the same PUSCH repeatedly multiple times. For example, the same PUSCH may mean a PUSCH scheduled by one uplink grant (e.g., uplink grant provided through DCI or configured grant by RRC signaling). Alternatively, the same PUSCH may mean a PUSCH carrying the same data (e.g., a transport block (TB)).

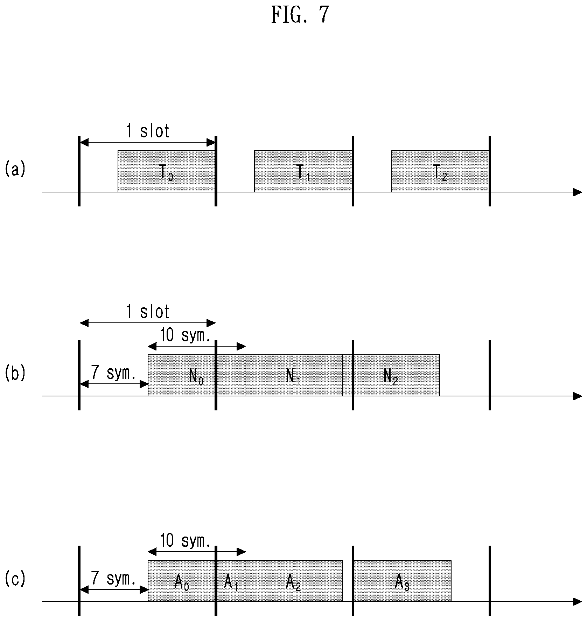

FIG. 7 is a diagram for describing examples of PUSCH repetition transmission to which the present disclosure may be applied.

For a PUSCH repetition type, Type A and Type may be defined.

PUSCH repetition type A is a slot-based repetition and an example in FIG. 7(a) shows that three repetitions $T_0$, $T_1$ and $T_2$ are performed respectively in three slots. In PUSCH repetition type A, the same transmission start symbol position and the same number (or length) of transmission symbols may be applied to each of a plurality of slots.

When there is an invalid symbol that may not be used for PUSCH transmission among symbol resources configuring a specific PUSCH repetition, transmission of a corresponding PUSCH repetition may not be performed by being dropped. For example, when a total of four PUSCH repetition transmissions of Rep0, Rep1, Rep2 and Rep3 are performed, if an invalid symbol is included in a symbol resource configuring Rep1, transmission of Rep1 may be dropped and only transmission of Rep0, Rep2 and Rep3 may be performed. Accordingly, the number of actually performed repetitions may be less than or equal to the configured number of repetitions.

For PUSCH repetition type A, a terminal may configure frequency hopping by a higher layer parameter. In PUSCH repetition type A, one of two frequency hopping modes, i.e., intra-slot frequency hopping and inter-slot frequency hopping may be configured for a terminal. Intra-slot frequency hopping may be applied to single-slot PUSCH transmission or multi-slot PUSCH transmission and inter-slot frequency hopping may be applied to multi-slot PUSCH transmission. For inter-slot frequency hopping, frequency hopping is performed at a slot boundary. For intra-slot frequency hopping, the number of symbols in a first hop and the number of symbols in a second hop are configured by a base station and frequency hopping is performed at a configured symbol boundary.

For PUSCH repetition type B, a repetition may be performed in a unit of a symbol length that a PUSCH is actually transmitted. For example, as in an example of FIG. 7(b), when a symbol length that a PUSCH is transmitted is 10 symbols, a PUSCH repetition may be performed in a unit of 10 consecutive symbols. A transmission time unit of a PUSCH repetition which does not consider a slot boundary, an invalid symbol, etc. may be referred to as a nominal repetition. In an example of FIG. 7(b), $N_0$, $N_1$ and $N_2$ represent three nominal repetitions.

For an actual PUSCH repetition, one PUSCH may not be transmitted at a slot boundary. Accordingly, when a PUSCH transmission includes a slot boundary, as in an example of FIG. 7(c), two actual repetitions may be distinguished at a slot boundary. For example, two actual repetitions $A_0$ and $A_1$ corresponding to nominal repetition $N_0$ may be distinguished at a slot boundary. In other words, 7 first symbols of $N_0$ may correspond to $A_0$ and 3 subsequent symbols of $N_0$ may correspond to $A_1$.

One PUSCH transmission may be performed only through consecutive symbols. Accordingly, when there is an invalid symbol in a time resource where a PUSCH repetition should be transmitted, an actual repetition may be configured by using consecutive symbols at a boundary of an invalid symbol. For example, when a time length of one PUSCH repetition is 10 symbols, if symbol index #0-#9 among 14 symbols within one slot correspond to one nominal repetition, but symbol index #3-#5 is an invalid symbol, symbol index #0-#2 and symbol index #6-#9 excluding it may configure one actual repetition, respectively. If a symbol that may not be used for PUSCH transmission (e.g., a DL symbol indicated by DCI format 2_0) is included in a resource of one actual repetition, a corresponding actual repetition may be dropped and may not be transmitted.

For PUSCH repetition type B, a terminal may configure frequency hopping by a higher layer parameter. For PUSCH transmission in a configured grant method, a frequency hopping mode may follow a configuration in a DCI format that activates it. For PUSCH repetition type B, inter-repetition frequency hopping or inter-slot frequency hopping may be configured. For inter-repetition frequency hopping, frequency hopping is applied per the number of nominal repetitions. Here, the number of nominal repetitions means the number of repetitions indicated by RRC signaling, etc., and when one nominal repetition passes (includes) a slot boundary (or a DL/UL switching time point), it is divided into two actual repetitions before and after a slot boundary (or a DL/UL switching time point), so the number of actual repetitions may be greater than the number of nominal repetitions. For inter-slot frequency hopping, frequency hopping may be performed at a slot boundary.

DMRS

A DMRS related to a data channel (e.g., a PDSCH, a PUSCH, etc.) may be configured with a front-load DMRS and an additional DMRS.

A transmission time resource position of a front-load DMRS may be determined based on a mapping type of a data channel, a start symbol position of a data channel, the number of DMRS symbols, etc.

A mapping type of a data channel (e.g., a PDSCH mapping type, a PUSCH mapping type, etc.) may be configured as Type A or Type B (e.g., slot-based or non-slot-based). For example, a mapping type of a data channel may be configured through RRC signaling.

For slot-based transmission, a transmission start symbol position of a front-load DMRS may be a third symbol or a fourth symbol within a transmission resource of a data channel. Information indicating whether a transmission start symbol position of a DMRS is the third or the fourth of transmission symbols of a data channel may be provided through a PBCH.

A front-load DMRS may be configured with one or two consecutive symbols (i.e., a single-symbol DMRS or a double-symbol DMRS). Information on the number of symbols may be provided through RRC signaling.

A symbol mapping type within a transmission resource of a front-load DMRS may be configured as two types (e.g., Type 1 or Type 2) and configuration information thereon may be provided through RRC signaling. According to Type 1, F-CDM (i.e., code division multiplexing (CDM) in a frequency domain), T-CDM (i.e., CDM in a time domain) and/or FDM may be used to support 4 or 8 antenna ports respectively according to whether a DMRS symbol length is 1 or 2. For Type 2, F-CDM, T-CDM and/or FDM may be used to support 6 or 12 antenna ports, respectively, according to whether a DMRS symbol length is 1 or 2.

The number of additional DMRSs may be one of 0, 1, 2 or 3. The maximum number of additional DMRSs transmitted may be determined through RRC signaling and the number of additional DMRSs actually transmitted within each maximum number of DMRSs and a transmission symbol position may be determined according to a length of an OFDM symbol that a data channel is transmitted.

The number of symbols and a mapping type of each additional DMRS may be determined to be the same as the number of symbols and a mapping type of a front-load DMRS.

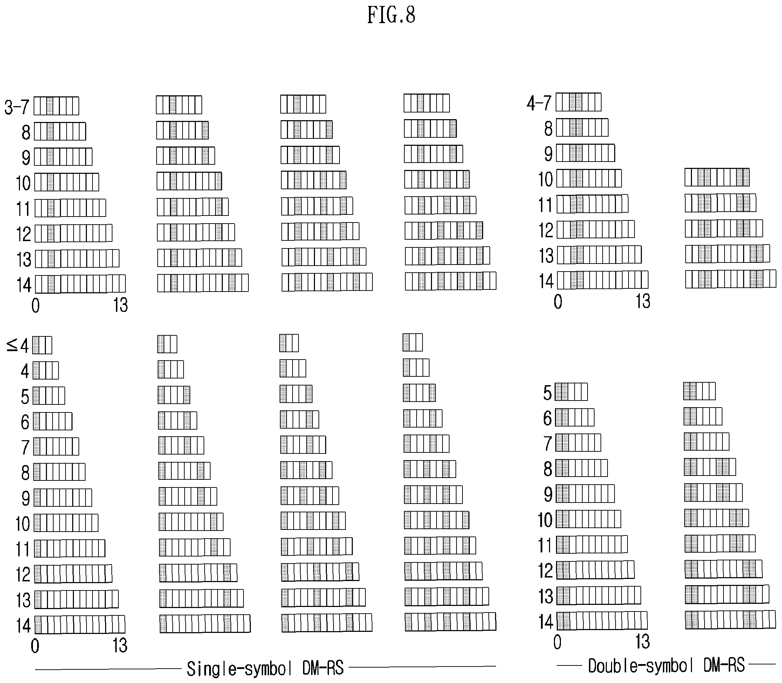

FIG. 8 is a diagram showing examples of a DMRS symbol position to which the present disclosure may be applied. FIG. 8(a) corresponds to examples of mapping type A, and a start symbol position ($l_0$) is 2 and may be defined as a symbol position relative to a slot boundary. FIG. 8(b) corresponds to examples of mapping type B, and may be defined as a symbol position relative to the start of transmission.

A position and number of symbols of a PUSCH DMRS may vary depending on the number of symbols that a PUSCH is transmitted. For example, when PUSCH repetition type B is applied, a symbol position and number of DMRSs may be determined based on a length of an actual repetition of a PUSCH. In this case, a position of a DMRS in a slot may be different per PUSCH repetition.

Dynamic Application of Time Domain Window to Uplink Channel

As described above, PUCCH/PUSCH repetition transmission may be applied, for example, for coverage enhancement (CE). For PUSCH repetition transmission type A, when all symbols corresponding to information indicating transmission start and length in a time domain (a starting and length indicator value, SLIV) are not available for PUSCH transmission, the entire PUSCH transmission of a corresponding slot may be dropped. Likewise, even for a PUCCH, the entire transmission may be dropped according to whether a symbol is available.

In order to improve uplink channel estimation performance on a base station side, although transmission of a PUCCH/a PUCCH is impossible, additional transmission of a DMRS without data in some available symbols may be considered. In addition, DMRS optimization is being discussed for CE, and for example, an equally spaced DMRS, interference randomization, etc. may be considered. Examples of the present disclosure may not transmit a PUSCH/a PUSCH, but they may be also applied to a method of mapping a DMRS and optimizing a DMRS in a new method on some available symbols.

For transmission of an uplink channel such as a PUCCH and a PUSCH, a variety of transmission parameters (or a transmission characteristic value) such as transmission power, phase, MCS, a frequency resource (e.g., a PRB) position, a bandwidth (BW), etc. may be configured/indicated. Accordingly, a terminal may perform uplink channel transmission based on a configured/indicated transmission parameter.

For uplink channel repetition transmission, a terminal may maintain some or all of transmission parameters applied to uplink channel transmission for a predetermined time duration (e.g., a time domain window). For example, in order to improve the performance of a base station's receiving end, joint channel estimation may be introduced. For joint channel estimation in a base station, it may be required to constantly maintain a transmission parameter (e.g., phase, power, etc.) applied to a transmission operation of a terminal. Accordingly, between a base station and a terminal, it is necessary to commonly determine and apply a time duration (or a time window) during which some/all of transmission parameters applied to uplink transmission remain the same. Otherwise, a base station performs uplink channel estimation because it expects that a terminal did not change a transmission parameter for joint channel estimation, but actually, a case may occur in which a terminal changed a transmission parameter, which is highly likely to hinder channel estimation performance of a base station. Accordingly, in the present disclosure, a variety of examples of a method for enabling/disabling joint channel estimation and a method for configuring/indicating and applying a time domain window to which joint channel estimation is applied are described for uplink channel repetition transmission of a terminal.

In examples below, joint channel estimation may be interpreted to have the same meaning as DMRS bundling. In other words, joint channel estimation/DMRS bundling may include configuring/indicating a terminal to transmit with maintaining a transmission parameter applied (e.g., some or all of power, phase, MCS, a PRB position, a BW, etc.) and a terminal performing uplink transmission accordingly, in order to perform join estimation in a time domain for improving performance of a base station such as channel estimation, decoding, etc.

In examples below, a time domain window for joint channel estimation or DMRS bundling may be simply referred to as a "time domain window" to the extent that there is no risk of confusion. The present disclosure includes a method of dynamically applying a time domain window, in particular, dynamically applying a size of a time domain window.

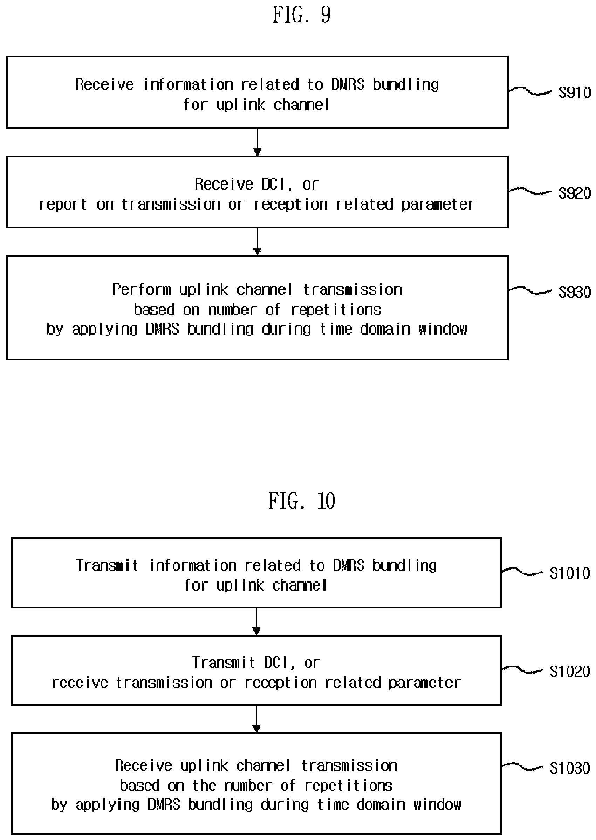

FIG. 9 is a diagram for describing an example of an uplink channel transmission method of a terminal according to the present disclosure.

In S910, a terminal may receive information related to DMRS bundling for an uplink channel from a network.

Information related to DMRS bundling may be information that explicitly indicates enabling/disabling of DMRS bundling through higher layer signaling or may be information that implicitly indicates enabling/disabling of DMRS bundling based on DMRS-related information provided through DCI (e.g., the number of ports, scrambling identification information, etc.).

In S920, a terminal may receive downlink control information (DCI) from a network or may report a parameter related to terminal transmission or reception to a network.

For example, DCI may include a parameter related to MCS, transmission power, etc. DCI may be DCI which is first received after receiving DMRS bundling-related information in S910 or which is first received after a certain time point or which is most recently received/detected/monitored.

For example, DCI may include scheduling information on an uplink channel and MCS/transmission power may be about an uplink channel. Alternatively, DCI may be related to scheduling of a downlink channel and MCS/transmission power may be related to downlink channel reception.

For example, a parameter related to transmission/reception of a terminal may include path loss (PL), power headroom (PHR) related information, etc.

In S930, a terminal may perform uplink channel transmission based on the number of repetitions while applying DMRS bundling during a time domain window.

A terminal may determine a length/a size of a time domain window to which DMRS bundling is applied based on information related to at least one of MCS, transmission power, PL and PHR (e.g., maintaining at least one of transmission parameter(s) such as transmission power, phase, MCS, a PRB position and a BW). Additionally or alternatively, a length/a size of a time domain window may be determined based on a characteristic value (e.g., a doppler shift value) indicated by a base station or estimated by a terminal that is not included in DCI or a terminal reporting parameter.

A correlation between MCS, transmission power, PL, PHR, doppler shift, etc. and a length of a time domain window may be defined as in various examples described later.

A length unit of a time domain window may be an uplink channel repetition unit or a slot unit.

If a size of a time domain window is smaller than the number of repetitions, a transmission parameter applied to an uplink channel after a time domain window is terminated/expired may be the same as or different from a transmission parameter applied to an uplink channel in a time domain window.

The number of repetitions may be an integer equal to or greater than 1 and may be preconfigured or predefined by a network. In the present disclosure, being preconfigured between a base station (or a network) and a terminal includes being configured through signaling between a base station and a terminal. In the present disclosure, being predefined includes being defined without separate signaling between a base station (or a network) and a terminal.

If an uplink channel is a PUSCH and transmission of a plurality of different TBs is performed through a PUSCH within a time domain window, the same transmission parameter may be also applied to a different TB.

FIG. 10 is a diagram for describing an example of an uplink channel reception method of a base station according to the present disclosure.

In S 1010, a base station may transmit information related to DMRS bundling for an uplink channel to a terminal.

In S 1020, a base station may transmit DCI to a terminal or receive reporting on a parameter related to terminal transmission or reception from a terminal.

In S1030, a base station may perform uplink channel reception based on the number of repetitions by assuming DMRS bundling during a time domain window.

In an example described by referring to FIG. 10, contents for information related to DMRS bundling, DCI, transmission/reception-related parameter reporting, a length of a time domain window, the number of repetitions, etc. are the same as those described by referring to FIG. 9, so an overlapping description is omitted.

It is described by using a PUSCH as a representative example of an uplink channel to which examples of the present disclosure are applied, but a scope of the present disclosure is not limited thereto, and examples of the present disclosure may be also applied to a PUCCH or another uplink channel or uplink signal.

Joint channel estimation for a PUSCH may be configured to a terminal through higher layer (e.g., RRC) signaling. A method for determining a size of a time domain window for joint channel estimation has not yet been defined.

When a terminal is configured with joint channel estimation through RRC signaling, it may determine a size of a time domain window based on various examples described below.

In addition, when a terminal is configured with a time domain window, it may perform uplink transmission without changing a transmission parameter or with maintaining power consistency and phase continuity, and with maintaining some or all of the same MCS, PRB position and BW during a time duration corresponding to a time domain window. In other words, a terminal expects that a base station will perform joint channel estimation during a time duration of a time domain window, and for it, it may perform transmission by maintaining a transmission parameter/characteristic assumed by a base station (or preconfigured through signaling between a base station and a terminal or predefined without separate signaling).

In addition, a terminal may expects/considers that a size of a time domain window configured/indicated as in examples described below is configured not to be longer than the maximum duration (e.g., the maximum time that a terminal may perform transmission by satisfying a requirement of a base station's joint channel estimation). Alternatively, when a size of a time domain window configured/indicated as in examples described below is larger than the maximum duration, a terminal may determine that a size of a time domain window is configured/indicated to be the same value as the maximum duration. In addition, when a time domain window is configured/indicated to a terminal, it may mean that joint channel estimation/DMRS bundling is enabled.

For example, a terminal may operate in a way that enabling/disabling of joint channel estimation is indicated according to the number of DMRS ports. For example, a terminal may determine that joint channel estimation is enabled if the number of DMRS ports of a scheduled PUSCH is an even number and may determine that joint channel estimation is disabled if the number of DMRS ports of a scheduled PUSCH is an odd number.

Additionally or alternatively, a terminal may be configured with up to 2 scrambling identification information (e.g., $n_{SCID}$) applied to PUSCH DMRS sequence generation. For example, scrambling identification information is included in information applied to initialization of a PUSCH DMRS sequence and may be indicated from a base station. For example, a terminal may determine that being configured with first $n_{SCID}$ is trigger (or enabling) of joint channel estimation or a terminal may determine that being configured with second $n_{SCID}$ is trigger of joint channel estimation.

Hereinafter, a variety of examples in which a terminal determines a size of a time domain window (i.e., at least one maintained time duration of a transmission parameter in the above-described examples) are described.

Embodiment 1

This embodiment relates to a method for configuring/indicating a size of a time domain window based on a MCS level. For example, a terminal may receive an indication on a size of a time domain window according to a MCS level indicated (e.g., indicated through DCI).

For example, a terminal may interpret a field/a bit of DCI indicating a MCS level as a field/a bit for joint channel estimation (or DMRS bundling). A base station and a terminal may preconfigure a mapping relationship between scheduling DCI (or a value/a state of a specific field within scheduling DCI) and a size of a time domain window through prior agreement (or signaling). Alternatively, even without separate signaling between a base station and a terminal, it may operate based on a predefined mapping relationship between scheduling DCI (or a value/a state of a specific field within scheduling DCI) and a size of a time domain window.

For example, for all or some of MCS indexes among a total of M MCS indexes, a plurality of MCS indexes may be configured/defined to indicate one time domain window in ascending order. For example, among MCS indexes included in scheduling information for a PUSCH, a value corresponding to 2 to 9 may be configured/defined to correspond to time domain window size 4, MCS index 10 to 16 may be configured/defined to correspond to time domain window size 2 and MCS index 17 to 27 may be configured/defined to correspond to time domain window size 1.

DCI indicating a MCS level may be DCI scheduling a PUSCH (or DCI indicating a MCS level to be applied to a PUSCH). Additionally or alternatively, DCI indicating a MCS level may be DCI scheduling a PDSCH (or DCI indicating a MCS level to be applied to a PDSCH). For example, a PDSCH may correspond to a PDSCH indicated/included in Msg2 (or a random access response (RAR)) in a random access process or a PDSCH indicated/included in Msg4 (a contention resolution message) or a PDSCH indicated/included in SIB1 (system information block 1) or another SIB, and a size of a time domain window may be determined based on a MCS level indicated for this PDSCH.

A MCS value included in all DCIs does not indicate a size of a time window, but a size of a time window may be configured/indicated based on a MCS value included in specific DCI. For example, specific DCI may correspond to DCI that is received/detected/monitored at a specific time point.

For example, DCI received at a specific time point may be DCI including a MCS level field/bit which is received first after DMRS bundling is configured/indicated for a terminal (e.g., DMRS bundling is enabled through RRC signaling).

Additionally or alternatively, information on the specific time point may be included in signaling configuring/indicating DMRS bundling (i.e., the specific time point may be indicated together when DMRS bundling is indicated through RRC), and a size of a time domain window may be determined based on DCI including a MCS level field/bit which is received first after a corresponding specific time point.

Additionally or alternatively, a time point to which DMRS bundling is applied may be indicated by a slot index, a subframe index, etc., and a size of a time domain window may be determined based on a MCS level included in DCI which is most recently indicated afterwards including a corresponding time point or excluding a corresponding time point.

Embodiment 2

This embodiment relates to a method for configuring/indicating a size of a time domain window based on a transmission power level. For example, a terminal may receive an indication on a size of a time domain window according to an indicated PUSCH transmission power level.

For example, after joint channel estimation (or DRMS bundling) is indicated to a terminal through RRC signaling, for a PUSCH indicated that repetition transmission is applied, a mapping relationship between a transmission power level indicated for a corresponding PUSCH and a size of a time domain window that such a transmission power level is maintained may be configured/defined.

For example, the following equation may be applied for PUSCH power control.

【Equation 3】

$$P_{\mathrm{PUSCH}b,f,c}(i,j,q_d,l) = \min\left\{\begin{array}{l} P_{\mathrm{CMAX},f,c}(i), \\ P_{\mathrm{O\_PUSCH}b,f,c}(j) + 10\log_{10}(2^{\mu} \cdot M_{\mathrm{RB},b,f,c}^{\mathrm{PUSCH}}(i)) + \alpha_{b,f,c}(j) \cdot PL_{b,f,c}(q_d) + \Delta_{\mathrm{TF},b,f,c}(i) + f_{b,f,c}(i,l) \end{array}\right\}$$

In the equation, $P_{\mathrm{O\_PUSCH},b,f,c}(j)$ is an open-loop power control parameter, and $P_{\mathrm{O\_PUSCH},b,f,c}(j) = P_{\mathrm{O\_NOMINAL\_PUSH,f,c}}(j) + P_{\mathrm{O\_UE\_PUSCH},b,f,c}(j)$ is determined. Here, $P_{\mathrm{O\_NOMINAL\_PUSH,f,c}}(j)$ is a cell-specific (i.e., commonly applied to a terminal within a cell) value and $P_{\mathrm{O\_UE\_PUSCH},b,f,c}(j)$ is a terminal-specific value. In addition, in the equation, b may correspond to a bandwidth portion (BWP), f may correspond to a carrier, c may correspond to a serving cell, i may correspond to a transmission occasion and j may correspond to a value identifying a parameter set. In addition, $q_d$ may correspond to a path loss reference and l may correspond to a closed-loop power control adjustment state. $\alpha_{b,f,c}$ may correspond to a partial power control multiplier, $PL_{b,f,c}$ may corresponds to a path loss value measured by a terminal, $\Delta_{\mathrm{TF},b,f,c}$ may correspond to a power value adjusted according to an allocated MCS value and $f_{b,f,c}$ may correspond to closed-loop power control calculation.

For example, a transmission power level mapped to a size of a time domain window may correspond to at least one of a value of $P_{\mathrm{O\_PUSCH},b,f,c}(j)$, a value of $P_{\mathrm{O\_UE\_PUSCH},b,f,c}(j)$ or a value of $P_{\mathrm{O\_NOMINAL\_PUSH,f,c}}(j)$ For example, a size of a time domain window may be determined based on a value of $P_{\mathrm{O\_PUSCH},b,f,c}(j)$ and/or a value of $P_{\mathrm{OUE\_PUSCH},b,f,c}(j)$ and/or a value of $P_{\mathrm{O\_NOMINAL\_PUSCH,f,c}}(j)$.

Additionally or alternatively, a terminal may consider a size of a time domain window based on terminal-specific transmission power of a PUSCH. For example, a terminal may determine a size of a time domain window based on a transmission power control (TPC) command value received after joint channel estimation (or DMRS bundling) is configured.

Embodiment 3

This embodiment relates to a method for determining a size of a time domain window based on path loss estimated by a terminal. For example, a terminal may determine a size of a time domain window based on a value of path loss estimated by it for a downlink channel or path loss reported to a base station.

For example, a terminal may be configured with a size of a time domain window according to a path loss value estimated based on a specific reference signal. For example, a size of a time domain window may be determined based on a value of $PL_{b,f,c}(q_d)$ which is downlink path loss estimate used to calculate transmission power of a PUSCH.

For example, a path loss value may be estimated based on a reference signal in a mapping relationship with a SRS resource indicator (SRI) of a scheduled PUSCH and a size of a time domain window may be determined based on an estimated path loss value.

For example, a path loss value may be estimated based on the most recent SSB/CSI-RS before joint channel estimation (or DMRS bundling) is configured through RRC signaling for a terminal, and a size of a time domain window may be determined based on an estimated path loss value.

For example, a path loss value may be estimated based on the most recently received SSB/CSI-RS before joint channel estimation (or DMRS bundling) is configured through RRC signaling for a terminal, and a size of a time domain window may be determined based on an estimated path loss value.

As such, a mapping relationship between a path loss value estimated for various reference signals and a time domain window size may be preconfigured or predefined. For example, at the same time when joint channel estimation (or DMRS bundling) is enabled through RRC signaling (i.e., including corresponding signaling), a terminal may receive configuration information on a mapping relationship between a path loss value and a size of a time domain window.

Embodiment 4

This embodiment relates to a method for determining a size of a time domain window based on power headroom report (PHR) reported by a terminal. For example, a terminal may receive an indication on a size of a time domain window according to a reported PHR value.

For example, a mapping relationship between a PHR value reported by a terminal and a size of a time domain window may be preconfigured or predefined. Signaling between a base station and a terminal for configuration may include at least one of RRC signaling, a MAC-CE (control element) or DCI.

For example, a size of a time domain window may be determined based on the most recently reported type-independent PHR before joint channel estimation (or DMRS bundling) is configured through RRC signaling for a terminal.

For example, a size of a time domain window may be determined based on the most recently reported specific type of PHR before joint channel estimation (or DMRS bundling) is configured through RRC signaling for a terminal.

A mapping relationship between type-independent PHR or a specific type of PHR and a size of a time domain window may be preconfigured or predefined. For example, existing PHR mapping may be defined as follows.

[Table 8]

| Reported value | Measured quantity value (dB) |
|---|---|
| POWER_HEADROOM_0 | PH < -32 |
| POWER_HEADROOM_1 | -32 <= PH < -31 |
| POWER_HEADROOM_2 | -31 <= PH < -30 |
| POWER_HEADROOM_3 | -30 <= PH < -29 |
| ... | ... |
| POWER_HEADROOM_53 | 20 <= PH < 21 |
| POWER_HEADROOM_54 | 21 <= PH < 22 |
| POWER_HEADROOM_55 | 22 <= PH < 24 |
| POWER_HEADROOM_56 | 24 <= PH < 26 |
| POWER_HEADROOM_57 | 26 <= PH < 28 |
| POWER_HEADROOM_58 | 28 <= PH < 30 |
| POWER_HEADROOM_59 | 30 <= PH < 32 |

16

(continued)

| Reported value | Measured quantity value (dB) |
|---|---|
| POWER_HEADROOM_60 | 32 <= PH < 34 |
| POWER_HEADROOM_61 | 34 <= PH < 36 |
| POWER_HEADROOM_62 | 36 <= PH < 38 |
| POWER_HEADROOM_63 | PH >= 38 |

PHR is calculated based on a difference value between terminal maximum transmission power (Pcmax) and UE configured output power. Considering it, as PHR is smaller, a larger time domain window size may be mapped. For example, a mapping relationship of a size of a time domain window according to a PHR value may map N time domain windows (or of length N) when a value reported in Table 8 is from POWER_HEADROOM_0 to POWER_HEADROOM_10 and may map N/2 time domain windows (or of N/2 length) when a value reported in Table 8 is from POWER HEADROOM 11 to POWER HEADROOM 20. In other words, for ascending order of values reported in Table 8, a time domain window size may be mapped in descending order. In addition, a terminal may expect that a time domain window is not configured for PHR less than or equal to a specific value.

Embodiment 5

This embodiment relates to a method for determining a size of a time domain window based on a doppler shift value. For example, a terminal may receive an indication on a size of a time domain window based on at least one of a doppler shift value reported to a base station according to an indication of a base station, a doppler shift value indicated by a base station to a terminal or a doppler shift value estimated by a terminal based on a specific signal from a base station.
For example, a mapping relationship between a doppler shift value and a size of a time domain window may be preconfigured or predefined. Signaling between a base station and a terminal for configuration may include at least one of RRC signaling, a MAC-CE or DCI.
A doppler shift value that has a mapping relationship with a size of a time domain window may correspond to a doppler shift value that is estimated and informed by a base station to a terminal based on a PUSCH transmitted by a terminal or a SRS transmitted by a terminal.
For example, a terminal may apply a doppler shift value estimated by a terminal based on a specific transmission signal of a base station as a doppler shift value that has a mapping relationship with a size of a time domain window based on prior agreement/configuration/definition with a base station. For example, a size of a time domain window may be determined based on a doppler shift value estimated based on a SSB/a CSI-RS which is most recently received from a time point when a terminal for which joint channel estimation (or DMRS bundling) is configured through RRC signaling is expected to perform joint channel estimation (or DMRS bundling) (e.g., a first PUSCH transmission time point after joint channel estimation (or DMRS bundling) is configured).

Embodiment 6

Based on the above-described embodiment 1 to 5 and detailed examples thereof, a terminal may determine a size/a length of a time domain window based on MCS, a transmission power level, path loss, PHR, a doppler shift, etc. received/indicated from a base station or estimated/determined by a terminal or reported by a terminal.
As such, it is assumed that a size of a time domain window determined by a terminal is N. A unit size of a time domain window may correspond to a length of one repetition transmission or may correspond to a length of one slot.
In addition, it is assumed that the number of repetition transmissions configured for a terminal is M. M may correspond to a sum of time lengths of actual repetition transmission or may correspond to the number of slots in which repetition transmission is performed.
For N>M, a terminal may perform a PUSCH transmission operation to satisfy a requirement of joint channel estimation (or DMRS bundling) for M PUSCH repetition transmissions. A terminal may determine that a time domain window is terminated early when M repetition transmissions are completed. For example, after M repetition transmissions, a terminal may or may not report early termination of a time domain window to a base station.
For N<=M, two cases may be considered.
A first case may be assumed as a case in which a relationship of kN = M is satisfied for any non-zero positive integer k (i.e., when M is a multiple of N).
In this case, a terminal may perform a PUSCH transmission operation to satisfy a requirement of joint channel estimation (or DMRS bundling) for up to N PUSCH repetition transmissions and may determine that upon completion of N repetition transmissions, a time domain window is terminated/expired. For example, after N repetition transmissions, a terminal may or may not report termination/expiration of a time domain window to a base station. This operation may be repeated k times. In other words, an independent (i.e., same or different) time domain window may be applied per repetition among k repetitions and N repetition transmissions may be performed within each time domain window.

A second case may be assumed as a case in which a relationship of kN+r = M is satisfied for any non-zero positive integer k and positive integer r between 0 and N.

In this case, a terminal may perform a PUSCH transmission operation to satisfy a requirement of joint channel estimation (or DMRS bundling) for up to N PUSCH repetition transmissions, and this operation may be repeatedly performed k times. In other words, an independent (i.e., same or different) time domain window may be applied per repetition among k repetitions and N repetition transmissions may be performed within each time domain window. For r subsequent transmissions, a PUSCH transmission operation may be performed to satisfy a requirement of joint channel estimation (or DMRS bundling) or a PUSCH transmission operation that does not consider whether a requirement of joint channel estimation (or DMRS bundling) is satisfied may be performed.

Additionally or alternatively, a start time point of each time domain window may be defined as being applied from a start time point of PUSCH repetition transmission or may be defined as starting from a time point when PUSCH repetition transmission is scheduled.

Embodiment 7

This embodiment relates to whether joint channel estimation (or DMRS bundling) is applied to transmission of a plurality of transport blocks (TB).

There is a problem in which it is unclear whether joint channel estimation (or DMRS bundling) will be supported for a plurality of different TBs for CE. For example, the number of consecutive uplink slots may not be sufficient according to a TDD frame structure. When joint channel estimation (or DMRS bundling) is not supported for a different TB, only transmission of the same TB in a consecutive uplink slot may be supported if joint channel estimation (or DMRS bundling) is configured, which may cause an increase in latency. Since consistency of transmission power/phase, etc. is necessary for joint channel estimation (or DMRS bundling), a terminal must maintain it when joint channel estimation (or DMRS bundling) is indicated. Accordingly, a method for clearly determining whether a terminal will transmit a PUSCH by prioritizing joint channel estimation (or DMRS bundling) for a different TB or whether a terminal will transmit a PUSCH without prioritizing joint channel estimation (or DMRS bundling) is required.

As a first method, when joint channel estimation (or DMRS bundling) is configured through RRC signaling, a terminal may equally apply and transmit a power control parameter even if it is a different TB. For example, it is assumed that a terminal receives a configuration/an indication on joint channel estimation (or DMRS bundling) for a different TB, e.g., PUSCH1 corresponding to TB1 and PUSCH2 corresponding to TB2. In this case, a terminal may equally apply a power control parameter of PUSCH1 and PUSCH2. Here, a power control parameter of a PUSCH preceding between PUSCH1 and PUSCH2 may be applied equally to both PUSCH transmissions or a power control parameter of the most recently indicated PUSCH may be applied to both PUSCH transmissions.

As a second method, when joint channel estimation (or DMRS bundling) is configured through RRC signaling, a terminal may perform transmission by applying joint channel estimation (or DMRS bundling) only when a power control parameter is the same for a different TB. For example, a terminal may perform a PUSCH transmission operation to satisfy a requirement of joint channel estimation (or DMRS bundling) only for TBs (or PUSCHs corresponding to TBs) for which a power control parameter is the same and actually configured output power is the same.

General Device to which the Present Disclosure may be applied

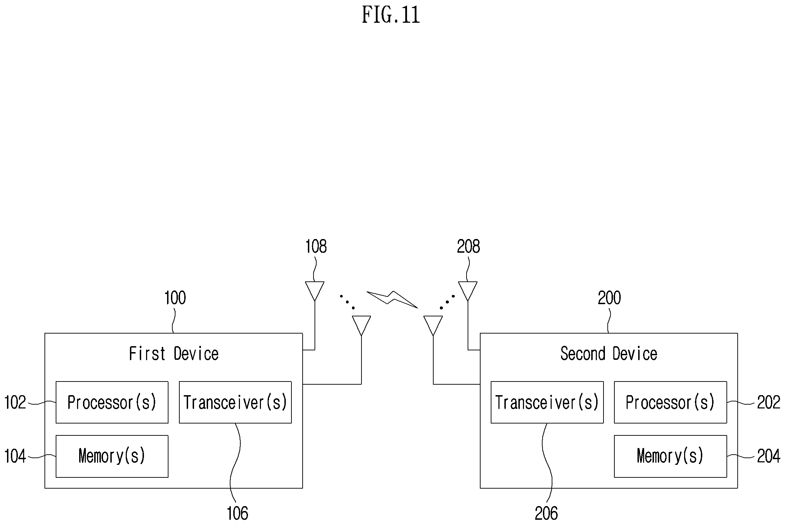

FIG. 11 illustrates a block diagram of a wireless communication device according to an embodiment of the present disclosure.

In reference to FIG. 11, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method for transmitting an uplink channel by a terminal in a wireless communication system, the method comprising:

   receiving, from a network, information related to a demodulation reference signal (DMRS) bundling for the uplink channel;
   receiving, from the network, downlink control information (DCI) including at least one field indicating a transmission or reception parameter; and
   transmitting, to the network, the uplink channel based on a number of repetitions with applying the DMRS bundling during a time domain window,
   wherein a size of the time domain window is based on a value of the at least one field.

2. The method according to claim 1, wherein:
   the at least one field includes at least one of a modulation and coding scheme (MCS)-related field, or a transmission power-related field.

3. The method according to claim 1, wherein:
   a mapping relationship between the value of the at least one field and the size of the time domain window is preconfigured or predefined.

4. The method according to claim 1, wherein:

   the DCI includes a scheduling information of the uplink channel, and
   a transmission parameter indicated by the at least one field is applied to the uplink channel.

5. The method according to claim 1, wherein:

   the DCI includes a scheduling information of a downlink channel, and
   a reception parameter indicated by the at least one field is applied to the downlink channel.

6. The method according to claim 1, wherein the DCI is:

   DCI which is received first after a reception time point of information related to the DMRS bundling;
   DCI which is received first after a time point indicated by the information related to the DMRS bundling; or
   DCI which is recently received before the uplink channel transmission.

7. The method according to claim 1, wherein:
   the DMRS bundling includes maintaining some or all of at least one transmission parameter applied to a transmission of the uplink channel based on the number of repetitions during the time domain window.

8. The method according to claim 7, wherein:
   the at least one transmission parameter includes at least one of a transmission power, a phase, a MCS, a frequency position, or a bandwidth.

9. The method according to claim 1, wherein:
   the information related to the DMRS bundling is provided through a higher layer signaling, or is indicated through a DMRS-related information included in information scheduling a transmission of the uplink channel.

**10.** The method according to claim 1, wherein:
the DMRS-related information includes at least one of a number of ports of the DMRS, or a scrambling identification information related to the DMRS.

**11.** The method according to claim 1, wherein:
based on the size of the time domain window being smaller than the number of repetitions, a transmission parameter for the uplink channel transmission after a termination of the time domain window is applied independently from a transmission parameter for the uplink channel transmission within the time domain window.

**12.** The method according to claim 1, wherein:
the uplink channel includes at least one of a physical uplink shared channel (PUCCH) or a physical uplink control channel (PUSCH).

**13.** The method according to claim 1, wherein:
based on a transmission of the PUSCH being related to a transmission of a plurality of different transport blocks, a same transmission parameter is applied to the plurality of different transport blocks within the time domain window.

**14.** A terminal for transmitting an uplink channel in a wireless communication system, the terminal comprising:

at least one transceiver; and
at least one processor connected to the at least one transceiver,
wherein the at least one processor is configured to:

receive, through the at least one transceiver, from a network, information related to a demodulation reference signal (DMRS) bundling for the uplink channel;
receive, through the at least one transceiver, from the network, downlink control information (DCI) including at least one field indicating a transmission or reception parameter; and
transmit, through the at least one transceiver, to the network, the uplink channel based on a number of repetitions with applying the DMRS bundling during a time domain window,
wherein a size of the time domain window is based on a value of the at least one field.

**15.** A method for receiving an uplink channel by a base station in a wireless communication system, the method comprising:

transmitting, to a terminal, information related to a demodulation reference signal (DMRS) bundling for the uplink channel;
transmitting, to the terminal, downlink control information (DCI) including at least one field indicating a transmission or reception parameter; and
receiving, from the terminal, the uplink channel based on a number of repetitions, to which the DMRS bundling is applied during a time domain window,
wherein a size of the time domain window is based on a value of the at least one field.

**16.** A base station for receiving an uplink channel in a wireless communication system, the base station comprising:

at least one transceiver; and
at least one processor connected to the at least one transceiver,
wherein the at least one processor is configured to:
transmit, through the at least one transceiver, to a terminal, information related to a demodulation reference signal (DMRS) bundling for the uplink channel;
transmit, through the at least one transceiver, to the terminal, downlink control information (DCI) including at least one field indicating a transmission or reception parameter, and
receive, through the at least one transceiver, from the terminal, the uplink channel based on a number of repetitions, to which the DMRS bundling is applied during a time domain window,
wherein a size of the time domain window is based on a value of the at least one field.

**17.** A processing apparatus configured to control a terminal in a wireless communication system, the processing unit comprising:

At least one processor; and

at least one computer memory which is operably connected to the at least one processor and stores instructions for performing a method according to any one claim of claim 1 to claim 13 based on being executed by the at least one processor.

18. At least one non-transitory computer readable medium storing at least one instruction, wherein:

the at least one instruction controls a device to perform a method according to any one claim of claim 1 to claim 13 in a wireless communication system by being executed by at least one processor.

FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Size depends on subcarrier spacing

Symbol

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

Resource Block

Resource Element
– In a resource grid, $(k, \bar{l})$
– In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

# FIG.4

# FIG.5

Resource grid

A carrier
(up to 3300 subcarriers,i,e.,275 RBs)

A BWP

1 RB=12 subcarrier

1 RE

1 subcarrier

1 Symbol

l=0 ·····

k=0

# FIG.6

INITIAL CELL SEARCH | SYSTEM INFORMATION RECEPTION | RANDOM ACCESS PROCEDURE | GENERAL DL/UL Tx/Rx

PSS/SSS& [DLRS]& PBCH

PDCCH/ PDSCH (BCCH)

PRACH | PDCCH/ PDSCH | PUSCH | PDCCH/ PDSCH

PDCCH/ PDSCH | PUSCH/ PUCCH

S601   S602   S603   S604   S605   S606   S607   S608

· DL/UL ACK/NACK
· UE CQI/PMI RI REPORT
  USING PUSCH AND PUCCH

FIG. 7

(a)

(b)

(c)

FIG.8

Single-symbol DM-RS

Double-symbol DM-RS

FIG. 9

| Receive information related to DMRS bundling for uplink channel | S910 |

| Receive DCI, or report on transmission or reception related parameter | S920 |

| Perform uplink channel transmission based on number of repetitions by applying DMRS bundling during time domain window | S930 |

FIG. 10

| Transmit information related to DMRS bundling for uplink channel | S1010 |

| Transmit DCI, or receive transmission or reception related parameter | S1020 |

| Receive uplink channel transmission based on the number of repetitions by applying DMRS bundling during time domain window | S1030 |

FIG.11

## INTERNATIONAL SEARCH REPORT

| International application No. |
| --- |
| **PCT/KR2022/011557** |

**A.    CLASSIFICATION OF SUBJECT MATTER**

**H04L 5/00**(2006.01)i; **H04L 1/08**(2006.01)i; **H04L 25/02**(2006.01)i; **H04W 52/14**(2009.01)i; **H04W 72/04**(2009.01)i; **H04W 72/12**(2009.01)i

According to International Patent Classification (IPC) or to both national classification and IPC

**B.    FIELDS SEARCHED**

Minimum documentation searched (classification system followed by classification symbols)

H04L 5/00(2006.01); H04W 74/00(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DMRS(demodulation reference signal), 상향링크 채널(uplink channel), 하향링크 제어 정보(downlink control information, DCI), 반복 횟수(number of repetitions), 시간 도메인 윈도우(time domain window)

**C.    DOCUMENTS CONSIDERED TO BE RELEVANT**

| Category* | Citation of document, with indication, where appropriate, of the relevant passages | Relevant to claim No. |
| --- | --- | --- |
| X<br>Y | XIAOMI. PUCCH coverage enhancement. R1-2105578, 3GPP TSG RAN WG1 #105-e, e-Meeting. 11 May 2021.<br>    See sections 1-2.2. | 1-7,9-18<br>8 |
| Y | APPLE INC. PUCCH coverage enhancements. R1-2105122, 3GPP TSG RAN WG1 #105-e, e-Meeting. 12 May 2021.<br>    See section 2.1. | 8 |
| A | MODERATOR (QUALCOMM). FL summary #2 of PUCCH coverage enhancement. R1-2106154, 3GPP TSG RAN WG1 #105-e, e-Meeting. 26 May 2021.<br>    See section 2. | 1-18 |
| A | ERICSSON. PUCCH Dynamic Repetition and DMRS Bundling. R1-2105655, 3GPP TSG-RAN WG1 Meeting #105-e, e-Meeting. 12 May 2021.<br>    See section 2. | 1-18 |

| ✓ | Further documents are listed in the continuation of Box C. | ✓ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 November 2022** | **25 November 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2022/011557** |

**C. DOCUMENTS CONSIDERED TO BE RELEVANT**

| Category* | Citation of document, with indication, where appropriate, of the relevant passages | Relevant to claim No. |
|---|---|---|
| A | US 2021-0195654 A1 (QUALCOMM INCORPORATED) 24 June 2021 (2021-06-24)<br>See claims 1-12. | 1-18 |

Form PCT/ISA/210 (second sheet) (July 2022)

**INTERNATIONAL SEARCH REPORT**
**Information on patent family members**

International application No.

**PCT/KR2022/011557**

| Patent document cited in search report | Publication date (day/month/year) | Patent family member(s) | Publication date (day/month/year) |
|---|---|---|---|
| US 2021-0195654 A1 | 24 June 2021 | KR 10-2022-0119022 A | 26 August 2022 |
| | | TW 202127945 A | 16 July 2021 |
| | | WO 2021-127563 A1 | 24 June 2021 |

Form PCT/ISA/210 (patent family annex) (July 2022)